# EUROPÄISCHE PATENTANMELDUNG

(11) **EP 0 593 005 A1**
(43) Veröffentlichungstag der Anmeldung: **20.04.1994**
(21) Anmeldenummer: 93116482.6
(22) Anmeldetag: 12.10.1993
(51) Int. Cl.: B01D 21/24

(54) **Vorrichtung zum Entsorgen von flüssigen Medien**

(30) Priorität: 15.10.1992 DE 9213913 U
(71) Anmelder: SCHEIBLE-VERSORGUNGSANLAGEN GMBH, D-73312 Geislingen (DE)
(72) Erfinder: Czotscher, Josef, Dipl.-Ing., D-73312 Geislingen/Eybach (DE); Binder, Bruno, Dipl.-Ing., D-74321 Bietigheim-Bissingen (DE); Martinitz, Hans-Peter, D-73329 Kuchen (DE); Koepf, Hans-Joerg, D-89174 Altheim (DE); Scheiffele, Ernst, D-89173 Lonsee-Luizhausen (DE)
(74) Vertreter: Lorenz, Werner, Dipl.-Ing.

(57) **Zusammenfassung**

Bei einer Vorrichtung zum Entsorgen von flüssigen Medien mit Produktionsrückständen aus der Industrie, insbesondere von flüssigen Kühl- und Schmierstoffen, die Späne, Metallpulver, Fasergewirr und ähnliches aufweisen, wird das zu entsorgende Medium von dem jeweiligen Anfallsort aus von einem Rückpumpbehälter (1) über Rohrleitungen (5,7) zu einem Zwischentank, Sammeltank oder einem Einlaufhochbehälter (8) transportiert. Der Boden (2) des Rückpumpbehälters (1), des Zwischentankes oder des Sammeltankes ist von einem Eintrag (3) zu einem Austrag (4) hin geneigt, wobei in Richtung des Austrages gerichtete Spritzdüsen (11) vorgesehen sind, die wenigstens teilweise den Boden überstreichen. In die Rohrleitungen (7) ist an wenigstens einer Stelle ein Trenn- und Verteilstück (9) eingesetzt, das einen Spülanschluß (20) aufweist. An diesem ist eine zu dem Rückpumpbehälter (1), dem Zwischentank oder dem Sammeltank führende Spülleitung (10) angeschlossen, die direkt oder indirekt über Verbindungsrohre mit den Spritzdüsen (11) verbunden ist.

## Beschreibung

Die Erfindung betrifft eine Vorrichtung zum Entsorgen von flüssigen Medien mit Produktionsrückständen aus der Industrie, insbesondere von flüssigen Kühl- und Schmierstoffen, die Späne, Metallpulver, Fasergewirr und ähnliches aufweisen, wobei das zu entsorgende Medium von dem jeweiligen Anfallsort aus von einem Rückpumpbehälter über Rohrleitungen zu einem Zwischentank, Sammeltank oder einem Einlaufhochbehälter transportiert wird, wobei der Boden des Rückpumpbehälters, des Zwischentankes oder des Sammeltankes von einem Eintrag zu einem Austrag hin geneigt ist, und wobei in Richtung des Austrages gerichtete Spritzdüsen vorgesehen sind, die wenigstens teilweise den Boden überstreichen.

In der DE 39 26 700 A1 ist ein Verfahren und eine Vorrichtung zum Entsorgen von flüssigen Medien von Produktionsrückständen beschrieben, bei dem das zu entsorgende Medium von dem jeweiligen Anfall- bzw. Einsatzsort aus zu einem hochliegenden Einlaufhochbehälter gepumpt wird, von wo es aus - kontinuierlich oder diskontinuierlich - über ein geschlossenes Rohrleitungssystem zu einem tieferliegenden Sammelbehälter weitergeleitet wird. Von dem Sammelbehälter aus erfolgt eine Weiterleitung zu Zwischenbehältern oder wieder zurück - gegebenenfalls nach einer Filtrierung und Reinigung des Mediums - zu dem jeweiligen Einsatz- bzw. Anfallsort zurück, von wo es von dem dort angeordneten Rückpumpbehälter wieder zu dem Einlaufhochbehälter hochgepumpt wird.

In der DE-GM 91 15 220 ist ein Sammeltank beschrieben, der auch ein Zwischentank oder ein Rückpumpbehälter sein kann, der von einem Eintrag in Richtung zu einem Austrag hin geneigt ist. Da sich in der Praxis herausgestellt hat, daß es in einem derartigen Tank oder Behälter bei der erfindungsgemäßen Verfahrensweise zu Ablagerungen und/oder Verstopfungen durch Festbestandteile kommen kann, die zusammen mit dem flüssigen Medium transportiert werden, ist in der DE-GM 91 15 220 vorgeschlagen worden, daß der Behälter bzw. Tank mit in Richtung zum Austrag gerichteten Spritzdüsen versehen ist, die wenigstens teilweise den Boden überstreichen und die eine zusätzliche Flüssigkeitsmenge für den Transport der festen Teile liefern.

Durch die Schrägstellung des Bodens in Verbindung mit den Spritzdüsen wird sichergestellt, daß auch feste Bestandteile in einem derartigen Behälter weitertransportiert werden können. Als Flüssigkeit, die durch die Spritzdüsen eingebracht wird, wird gereinigte bzw. neue Kühl- oder Schmierstoffflüssigkeit verwendet.

Nachteilig bei diesem Verfahren ist jedoch, daß für die Spülung und für den Weitertransport der festen Bestandteile mit dem flüssigen Medium eine erhebliche Menge an Gesamtflüssigkeit erforderlich ist. Dies bedeutet, daß entsprechend auch eine erhebliche Menge an Medium im Kreislauf geführt werden muß, was nicht nur einen höheren Aufwand an Energie bedeutet, sondern darüberhinaus auch eine entsprechend stark dimensionierte Rohrleitungsauslegung erfordert. Von Nachteil ist weiterhin auch noch, daß die Reinigung einer derart hohen Menge eines Mediums eine entsprechend hohe Filterleistung erfordert.

Der vorliegenden Erfindung liegt daher die Aufgabe zugrunde, eine Vorrichtung der eingangs erwähnten Art zu schaffen, durch die mit geringem Aufwand und ohne Beeinträchtigung der Entsorgung die in der Anlage vorgesehenen Rückpumpbehälter, Zwischentanks oder Sammeltanks weitgehend frei von Ablagerungen und/oder Verstopfungen gehalten werden können.

Erfindungsgemäß wird diese Aufgabe dadurch gelöst, daß in die Rohrleitungen an wenigstens einer Stelle ein Trenn- und Verteilstück eingesetzt ist, das einen Spülanschluß aufweist, an den eine zu dem Rückpumpbehälter, dem Zwischentank oder dem Sammeltank führende Spülleitung angeschlossen ist, die direkt oder indirekt über Verbindungsrohre mit den Spritzdüsen verbunden ist.

Anstelle von flüssigen, gefilterten Kühl- und Schmierstoffen oder einer anderen Behandlungsflüssigkeit, die sehr teuer sind, wird nun erfindungsgemäß die mit den Feststoffen behaftete, noch ungefilterte Flüssigkeit verwendet.

Eines der wesentlichen Vorteile der erfindungsgemäßen Vorrichtung besteht darin, daß damit die im Kreislauf zu führende Flüssigkeitsmenge deutlich reduziert werden kann, wodurch auch die Auslegung der Rohrleitungen entsprechend reduziert werden kann. Ein weiterer Vorteil besteht auch darin, daß weniger Filterleistung zum Reinigen der Flüssigkeit erforderlich ist.

Das erfindungsgemäße Trenn- und Verteilstück kann an einer oder auch im Bedarfsfalle an mehreren Stellen in der Anlage vorgesehen sein.

Ein möglicher und sehr vorteilhafter Einsatzort liegt in einer Anordnung in der Hochleitung für den Einlaufhochbehälter und einer Rückführung der Spülleitung zu dem Rückpumpbehälter, der am Einsatz- bzw. Anfallsort steht.

Eine andere Möglichkeit der Anordnung des Trenn- und Verteilstückes kann darin bestehen, daß dies in die Verbindungsleitung zu einem Zwischentank oder dem Sammeltank eingesetzt ist, und daß die Spülleitung zu dem Zwischentank oder dem Sammeltank zurückgeführt ist.

In einer sehr vorteilhaften und nicht naheliegenden Weiterbildung der Erfindung kann vorgesehen sein, daß das Trenn- und Verteilstück mit einer Siebeinrichtung (Trennrohr) versehen ist, wobei der Spülanschluß hinter der Siebeinrichtung angeordnet ist.

Durch die Zwischenschaltung einer Siebeinrichtung läßt sich die Spülung des jeweiligen Behälters oder Tanks über die Spritzdüsen problemlos und ohne die Gefahr von Verstopfungen durchführen.

Durch Reibungsverluste in der Folgeleitung, hinter dem Trenn- und Verteilstück baut sich ein Überdruck auf, der das Medium durch die Siebeinrichtung in Richtung auf die Spülleitung hindurchdrückt. Auf diese Weise wird quasi in einem Bypaß-Strom die noch belastete Kühl- und Schmierstoffflüssigkeit, welche lediglich von groben, festen Bestandteilen befreit worden ist, zur entsprechenden Verwendung als Zusatzflüssigkeit den Spritzdüsen zugeführt.

Die Siebeinrichtung kann entsprechend dem Einsatzzweck und den anfallenden festen Produktionsrückständen unterschiedlich ausgeführt sein. So können z.B. Bohrungen, Schlitze, Siebstrecken, Spaltsiebe und ähnliches vorgesehen sein.

In einer einfachen konstruktiven Ausgestaltung kann das Trenn- und Verteilstück ein Trennrohr aufweisen, das mit der Siebeinrichtung versehen ist, wobei z.B. das Trennrohr von einem Trennrohrgehäuse umgeben ist, in dem der Spülanschluß angeordnet ist.

In einfacher Weise kann das Trennrohr dabei mit einem Siebzylinder versehen sein bzw. als Siebzylinder ausgebildet sein, in dessen Umfangswand Sieböffnungen angeordnet sind.

Auf diese Weise läßt sich das als Siebzylinder ausgebildete Trennrohr an beiden Stirnseiten ohne großen Aufwand in die Rohrleitung einsetzen.

Die Verbindung des Trenn- und Verteilstückes mit der Rohrleitung, in die es eingesetzt ist, kann dabei in einfacher Weise dadurch erfolgen, daß das Trennrohrgehäuse an einem oder an beiden Enden jeweils mit einem Gewinde zur Verbindung mit der Rohrleitung versehen ist.

Um im Bedarfsfalle die Siebeinrichtung von daran anhaftenden bzw. sich dort festgesetzten festen Produktionsmitteln freizuspülen, kann vorgesehen sein, daß der Spülanschluß mit einem Reinigungsanschluß zur Freispülung der Siebeinrichtung versehen ist. Nachfolgend ist ein Ausführungsbeispiel der Erfindung anhand der Zeichnung prinzipmäßig dargestellt.

Es zeigt:

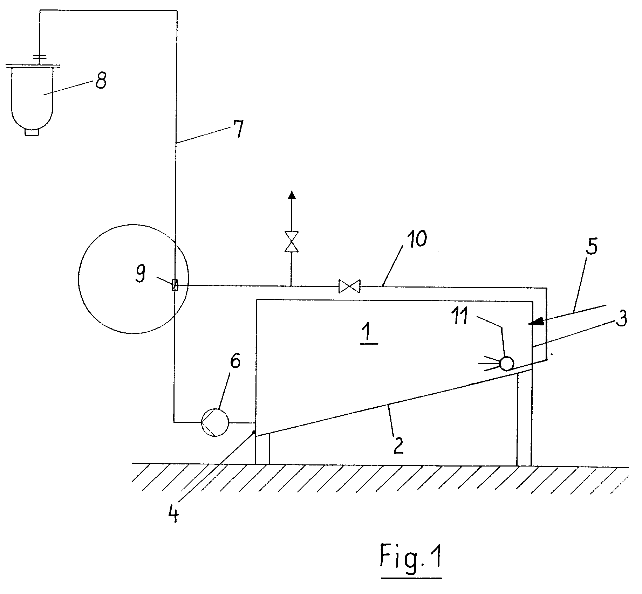

- Fig. 1:: einen Teil einer Vorrichtung zum Entsorgen von flüssigen Medien mit einem Rückpumpbehälter und dem erfindungsgemäßen Trenn- und Verteilstück;
- Fig. 2:: einen Längsschnitt durch das erfindungsgemäße Trenn- und Verteilstück in vergrößerter Darstellung;
Die Vorrichtung zum Entsorgen von flüssigen Medien mit Produktionsrückständen ist grundsätzlich in gleicher oder ähnlicher Weise aufgebaut wie die in der DE 39 26 700 A1 beschriebene Vorrichtung. Als Behälter bzw. Tank, in dem Spritzdüsen wirken, ist bei einem Ausführungsbeispiel ein Rückpumpbehälter 1 dargestellt, der am Einsatz- bzw. Anfallsort des flüssigen Kühl-Schmierstoffes oder einer anderen Behandlungsflüssigkeit steht. Der Rücklaufbehälter 1 ist mit einem schrägen Boden 2 versehen, der von einem Eintrag 3 zu einem Austrag 4 hin geneigt ist. Die Zufuhr der Flüssigkeit mit den Produktionsrückständen erfolgt durch eine Zufuhrleitung 5.

Vom Austrag 4 aus fördert eine Pumpe 6 das flüssige Medium über eine Hochleitung 7 zu einem Einlaufhochbehälter 8. Von dem Einlaufhochbehälter 8 aus führt eine nicht dargestellte Sammelleitung, die im Bedarfsfalle mit mehreren Einlaufhochbehältern verbunden sein kann, zu einem ebenfalls nicht dargestellten Sammeltank, von dem aus das flüssige Medium zum Einsatzort zurücktransportiert werden kann.

In der Hochleitung 7 ist ein Trenn- und Verteilstück 9 angeordnet, von dem aus eine Spülleitung 10 zu einem Spritzrohr mit Spritzdüsen 11 geführt ist. Von den Spritzdüsen 11 aus wird Flüssigkeit in Richtung auf den Boden 2 des Rücklaufbehälters 1 gespritzt.

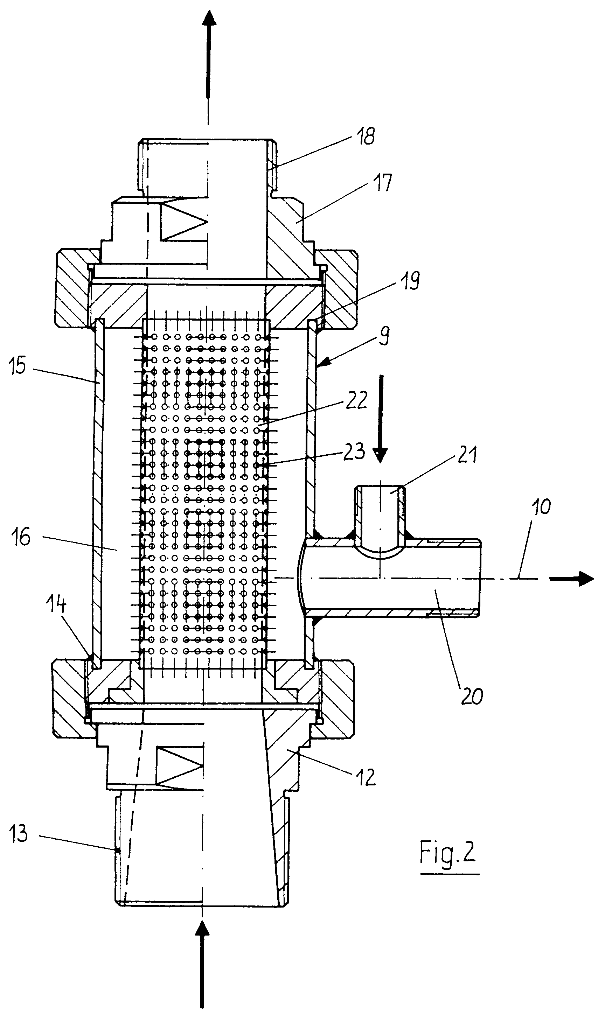

Aus der Figur 2 ist in vergrößerter Darstellung eine mögliche Ausgestaltung des Trenn- und Verteilstückes 9 ersichtlich. Das Trenn- und Verteilstück 9 weist ein Trennrohr 22 auf, das in Form eines Siebzylinders mit Sieböffnungen 23 in der Umfangswand ausgebildet ist, mit Anschlußstücken an beiden Stirnseiten. Die Verbindung des Trennrohres 22 mit den Anschlußstücken kann z.B. durch Schweißen erfolgen. An einem Ende ist das Anschlußstück als Anschlußstutzen 12 mit einem Anschlußgewinde 13 ausgebildet. Das Anschlußgewinde 13 kann z.B. direkt in einen Anschlußstutzen der Pumpe 6 eingeschraubt werden. Der Anschlußstutzen 12 besitzt auf der dem Trennrohr 22 zu- gewandten Seite eine Ringnut 14, in die ein Trennrohrgehäuse 15 eingesetzt ist. Das Trennrohrgehäuse 15 umgibt das Trennrohr 22 mit Abstand, wodurch ein Ringraum 16 entsteht.

Auf der von dem Anschlußstutzen 12 abgewandten Seite des Trennrohres 22 ist ebenfalls ein Anschlußstück 17 vorgesehen, das über eine Gewindeverschraubung 18 mit der Hochleitung 7 verbunden werden kann. Auf diese Weise wird ein geschlossener Ringraum 16 geschaffen.

Die Hochleitung 7 kann entweder direkt auf den Rohrstutzen 17 aufgeschoben werden, wenn die Hochleitung 7 z.B. als elastischer Schlauch ausgebildet ist oder die Verbindung erfolgt die Verschraubung 18. Über eine Ringnut 19 in dem Anschlußstück 17 ist das Trennrohr 22 fest mit diesem verbindbar.

Von der Umfangswand des Trennrohrgehäuses 15 aus zweigt ein Spülanschluß 20 ab, an den sich die Spülleitung 10 anschließt.

Das Trenn- und Verteilstück 9 funktioniert auf folgende Weise:
Das von der Pumpe 6 durch die Hochleitung 7 geförderte flüssige Medium tritt - entsprechend der Pfeilrichtung - in das Trenn- und Verteilstück 9 ein und am oberen Ende - gemäß Pfeilrichtung - wieder aus.

Im Trennrohr 22 baut sich durch Reibungsverluste ein Überdruck auf, durch den das Medium durch die Siebbohrungen 23 hindurch und in den Ringraum 16 befördert wird. Verunreinigungen in fester Form, die größer sind als die Siebbohrungen 23, werden im Trennrohr zurückgehalten bzw. mit dem Medium weitertransportiert.

Das auf diese Weise von grobstückigen Verunreinigungen befreite Medium wird über den Spülanschluß 20 und die Spülleitung 10 den Spritzdüsen 11 zugeführt.

Wenn sich nun in der Praxis - je nach Einsatzzweck - z.B. herausgestellt hat, daß eine Flüssigkeitsmenge von 300 l/min erforderlich ist, 200 l/min für die Bearbeitung an der Maschine und 100 l/min, um einen einwandfreien Transport des flüssigen Mediums mit den Produktionsrückständen durch den Rücklaufbehälter 1 zu erhalten, dann kann z.B. durch das Trenn- und Verteilstück 9 eine Flüssigkeitsmenge von z.B. 100 l/min in dem im Kreislauf gefahrenen System und damit in den Rohrleitungen eingespart werden, wenn z.B. diese Menge im Bypaß über die Spülleitung zum Freispritzen der Oberfläche abgezweigt wird. In diesem Falle fließt durch die übrigen Rohrleitungen lediglich eine Menge von 200 l/min, wobei trotzdem zum Spülen für den Rückpumpbehälter 1 eine Spülmenge von 100 l/min zur Verfügung steht. Entsprechend braucht somit auch die Filterleistung zum Reinigen des Medium nur auf 200 l/min ausgelegt werden. Gleiches gilt auch für nachgeschaltete Pumpen und die Auslegung der übrigen Rohrleitungen im System.

Falls erforderlich kann der Spülanschluß 20 noch mit einem Reinigungsanschluß 21 versehen sein, durch den im Bedarfsfalle mit einer Einleitung von Druckflüssigkeit in Pfeilrichtung eine Freispülung des Siebzylinders bzw. des Trennrohres 22 von der Rückseite her erfolgen kann. Von der Spülleitung 10 kann gegebenenfalls noch eine Abzweigeleitung abgehen, die zu anderen Einrichtungen, wie z.B. zum Anfalls- bzw. Einsatzort des Kühl- bzw. Schmiermittels, führt.

## Patentansprüche

1. Vorrichtung zum Entsorgen von flüssigen Medien mit Produktionsrückständen aus der Industrie, insbesondere von flüssigen Kühl- und Schmierstoffen, die Späne, Metallpulver, Fasergewirr und ähnliches aufweisen, wobei das zu entsorgende Medium von dem jeweiligen Anfallsort aus von einem Rückpumpbehälter über Rohrleitungen zu einem Zwischentank, Sammeltank oder einem Einlaufhochbehälter transportiert wird, wobei der Boden des Rückpumpbehälters, des Zwischentankes oder des Sammeltankes von einem Eintrag zu einem Austrag hin geneigt ist, und wobei in Richtung des Austrages gerichtete Spritzdüsen vorgesehen sind, die wenigstens teilweise den Boden überstreichen,
**dadurch gekennzeichnet**, daß
in die Rohrleitungen (7) an wenigstens einer Stelle ein Trenn- und Verteilstück (9) eingesetzt ist, das einen Spülanschluß (20) aufweist, an den eine zu dem Rückpumpbehälter (1), dem Zwischentank oder dem Sammeltank führende Spülleitung (10) angeschlossen ist, die direkt oder indirekt über Verbindungsrohre mit den Spritzdüsen (11) verbunden ist.

2. Vorrichtung nach Anspruch 1,
**dadurch gekennzeichnet**, daß
die Rohrleitung in die das Trenn- und Verteilstück (9) eingesetzt ist, die Hochleitung (7) für den Einlaufhochbehälter (8) ist und die Spülleitung (10) zu dem Rückpumpbehälter (1) zurückführt.

3. Vorrichtung nach Anspruch 1,
**dadurch gekennzeichnet**, daß
die Rohrleitung in die das Trenn- und Verteilstück (9) eingesetzt ist, die Verbindungsleitung zu einem Zwischentank oder dem Sammeltank ist und die Spülleitung (10) zu dem Zwischentank oder Sammeltank zurückführt.

4. Vorrichtung nach einem der Ansprüche 1 bis 3,
**dadurch gekennzeichnet**, daß
das Trenn- und Verteilstück (9) mit einer Siebeinrichtung (Trennrohr 22) versehen ist, wobei der Spülanschluß (20) hinter der Siebeinrichtung angeordnet ist.

5. Vorrichtung nach Anspruch 4,
**dadurch gekennzeichnet**, daß
das Trenn- und Verteilstück (9) ein Trennrohr (22) aufweist, das mit der Siebeinrichtung versehen ist.

6. Vorrichtung nach Anspruch 5,
**dadurch gekennzeichnet**, daß
das Trennrohr (22) von einem Trennrohrgehäuse (15) umgeben ist, in dem der Spülanschluß (20) angeordnet ist.

7. Vorrichtung nach Anspruch 5 oder 6,
**dadurch gekennzeichnet**, daß
das Trennrohr (22) als Siebzylinder ausgebildet ist, in dessen Umfangswand Sieböffnungen (23) angeordnet sind.

8. Vorrichtung nach Anspruch 7,
**dadurch gekennzeichnet**, daß
der Siebzylinder an beiden Stirnseiten an die Rohrleitung (7) angeschlossen ist.

9. Vorrichtung nach einem der Ansprüche 6 bis 8,
**dadurch gekennzeichnet**, daß
das Trennrohrgehäuse (15) an einem oder an beiden Enden jeweils über ein Anschlußstück (12,17) mit der Rohrleitung (7) verbunden ist.

10. Vorrichtung nach einem der Ansprüche 1 bis 9,
**dadurch gekennzeichnet**, daß
der Spülanschluß (20) mit einem Reinigungsanschluß (21) zur Freispülung der Siebeinrichtung (Trennrohr 22) versehen ist.
